Europäisches Patentamt

European Patent Office

Office européen des brevets

(11) Publication number: **0 412 626 A1**

# EUROPEAN PATENT APPLICATION

(21) Application number: 90301927.1

(51) Int. Cl.⁵: **F16L 13/14, F16L 21/02**

(22) Date of filing: 22.02.90

(30) Priority: **11.08.89 CA 608137**

(43) Date of publication of application:
**13.02.91 Bulletin 91/07**

(84) Designated Contracting States:
**AT BE CH DE DK ES FR GB GR IT LI LU NL SE**

(71) Applicant: **FORM RITE LIMITED**
**825 Bradley Avenue**
**London, Ontario N6E 3C2(CA)**

(72) Inventor: **McLeod, Keith**
**c/o 825 Bradley Avenue**
**London, Ontario N6E 3C2(CA)**
Inventor: **Lancia, Santino**
**c/o 825 Bradley Avenue**
**London, Ontario N6E 3C2(CA)**
Inventor: **Caetano, Norman**
**c/o 825 Bradley Avenue**
**London, Ontario N6E 3C2(CA)**

(74) Representative: **Thomson, Paul Anthony et al**
**Potts, Kerr & Co. 15, Hamilton Square**
**Birkenhead Merseyside L41 6BR(GB)**

(54) **Hydraulic fitting.**

(57) The present invention provides means by which a plastic coated tube (2) may be rigidly fastened and sealed to a housing (4) by means of an O ring (22), a backup ring (20) and deformation of the receiving portion of the housing (24) to mechanically grip the backup ring.

FIG.2.

# HYDRAULIC FITTING

This invention relates to improvements in tubular fittings. More particularly, it relates to improved means for connecting one tubular member to another for purposes such as a "banjo fitting" as used in the hydraulic control systems of automobile transmissions or power steering and the like.

Hitherto, whenever it was necessary to connect a tube of an hydraulic system to a housing or connector, the connection was often made by inserting the male end of a tube in a matching female receptacle after which the juncture would be sealed by welding, soldering or brazing the two pieces of metal together. This procedure has always been difficult, time consuming, expensive and required special equipment, skill and heat.

Furthermore, this method of connecting tubular members cannot be used where one of the members has a plastic corrosion protective coating such as polyvinylflouride.

It is therefore the purpose of this invention to provide a means whereby a tube with a non-metal coating may be fastened and sealed to a housing or connector without the inappropriate technique of welding or soldering or brazing.

This object and other advantages may be achieved by means of the present invention which consists of a fitting for a hydraulic system comprising a tube having one end adapted to be connected to a housing, a backup ring upstanding around the outer surface of the tube near the said end and an O ring mounted on the outer surface of the tube between the end and the backup ring, a housing having fluid conduits adapted to communicate with the tube and having a receptacle with an open end adapted to receive the end of the tube and the O ring and the backup ring therein. The open end of the receptacle of the housing is capable of being permanently deformed to a diameter smaller than the dimension of the backup ring on the side remote from the end of the tube so as to rigidly secure the tube within the receptacle of the housing and to capture and protect the ring which is preferably an elastomeric material thick enough to fit tightly between the tube and the receptacle and form a fluid tight seal. This structure is especially adaptable for a fitting in which the tubing has a corrosion protective non-metal coating such as polyvinylflouride.

The invention which is the subject of this application may be better understood by means of a description of one embodiment thereof with reference to the drawings in which

Figure 1 illustrates a tubular member and a housing to which it is intended to be fastened and sealed;

Figure 2 illustrates the same tubular member fastened and sealed to the housing in accordance with the present invention.

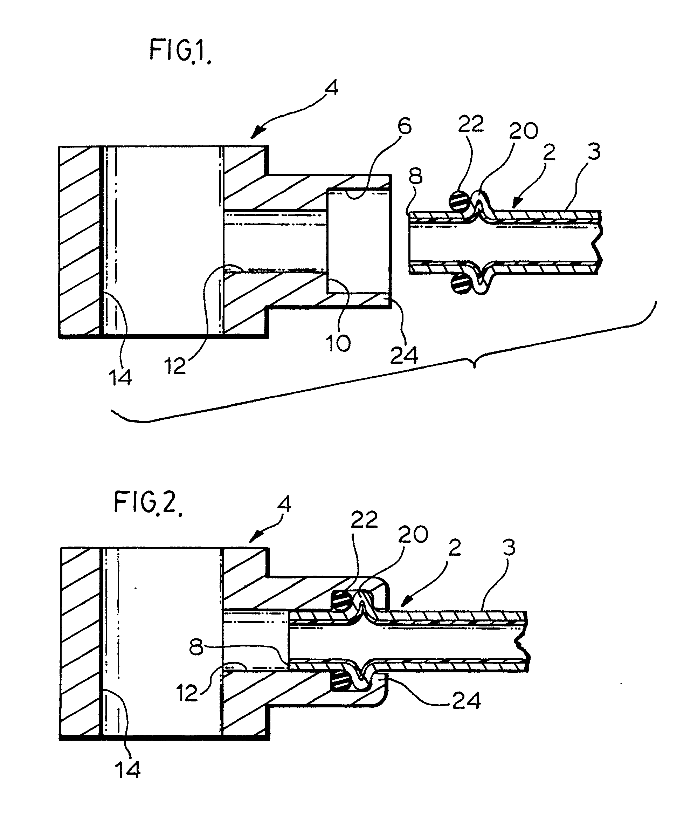

In Figure 1 is shown a hollow tube 2 which is designed to contain and conduct fluids such as hydraulic oil or the like which may be made of metal with a suitable non-metalic corrosion protective coating 3 such as polyvinylfluoride.

Adjacent to the tube 2 is a housing 4 which has a receptacle 6 consisting of a cylindrical bore of about the same internal diameter as the external diameter of the ring 20 of the tube 2.

The housing has a raised shoulder 10 and a reduced diameter conduit 12 leading from the receptacle 6 to the transverse bore 14 of the housing.

The tube 2 is provided, at a short longitudinal distance from it's end, with a raised backup ring 20 which runs circumferentially around the tube in a plane perpendicular to the longitudinal axis of the tube.

Immediately in front of the backup ring 20 is an O ring 22 made of a flexible or elastomeric material such as rubber and dimensioned so that the ring fits relatively tightly against the outer wall of the tube and extends radially larger in diameter than the backup ring 20.

The bore 14 of the housing 4 is intended to receive an insert similar to a threaded bolt having appropriate holes or ports drilled therein so as to communicate hydraulic fluid, and therefore hydraulic pressure, to various parts of the mechanism such as an automatic transmission or power steering of an automobile. The details of this insert which fits in the bore 14 are known to those skilled in the technology and is not important for an understanding of the present invention.

Figure 2 illustrates the completed connection between the tube 2 and the housing 4 in which the end 8 of the hollow tube 2 is inserted in the receptacle 6 and conduit 12 until the ring O 22 abuts against the shoulder 10. As illustrated, the tube and the housing are so dimensioned that the backup ring 20 is positioned a short distance inside the receptacle 6 and the O ring 22, which is forced against the shoulder 10, forms a tight seal between the outer wall of the tube and the inner wall of the receptacle 6.

Once the tube has been inserted as shown, the wall 24 which surrounds the receptacle 6 is "crimped" or bent inwards so that the wall 24 prevents the longitudinal outward movement of the tube from the receptacle and holds the O ring in against the shoulder 10.

Machinery to deform metal in various ways, including the crimping or bending of the wall 24 as illustrated, is well known in the industry and does not form part of the present invention.

In the arrangement shown in Figure 2, hydraulic fluid from a reservoir or a pump or a pressure system may be communicated through the bore of the hollow tube 2 to the conduit 12 and into the bore 14 of the housing to effect the functions of the automatic transmission, or power steering, or other such device. The crimped wall 24 provides a rigid fastening to keep the hollow tube connected to the housing and the O ring 22 provides a fluid tight seal for the connection.

Thus, by means of the present invention a metal housing 4 may be rigidly connected to a tube, 2 which may have a non-metalic coating, with a fluid tight seal, without using traditional techniques of welding, soldering or brazing.

In fact, the present invention may be used to connect a variety of materials which are not suitable for welding, soldering or brazing so long as they have sufficient rigidity to remain fastened together and providing the housing may be deformed to fasten over the backup ring 20 without returning to it's original shape as some plastics might do.

While the illustrated embodiment shows the internal diameter of the tube 2 raised at the location of the ring 20, this ring might be formed entirely on the external surface of the tube without any deformation of the internal wall of the tube.

It will of course be realized that other modifications and variations from the illustrated embodiment might be employed without departing from the inventive concept herein.

## Claims

1. A fitting for an hydraulic system comprising; a tube having one end adapted to be connected to a housing;
a backup ring upstanding around the outer surface of said tube near said end;
an O ring mounted on the outer surface of said tube between said backup ring and said end;
a housing having fluid conduits adapted to communicate with said tube
a receptacle in said housing having an open end adapted to receive the end of said tube and said O ring and said backup ring therein;
the open end of said receptacle being permanently deformable to a diameter of smaller dimension than the diameter of said backup ring at a location beside said backup ring remote from said tube end.

2. A fitting as claimed in Claim 1 in which said housing is a permanently deformable metal and said tube has a non-metalic coating.

3. A fitting as claimed in Claims 1 and 2 in which said tube coating is polyvinylfluoride.

4. A fitting as claimed in Claims 1, 2 and 3 in which said O ring is an elastomeric material thicker than the space between the outer surface of said tube and the inner surface of said receptacle adapted to form a fluid tight seal between said tube and said receptacle.

## FIG.1.

## FIG.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 510 227 (S.A. DES ETABLISSEMENTS STAUBLI) * Page 2, lines 2-15; figures 1,2 * | 1,2,4 | F 16 L 13/14 F 16 L 21/02 |
| A | US-A-2 551 393 (PINGER) * Figures 1,2 * | 1,4 | |
| A | DE-C- 868 542 (MANNESMANNRÖHREN A.G.) * Page 2, lines 26-32; claim 1; figure 1 * | 1,2 | |
| A | US-A-4 853 297 (TAKAHASHI) * Column 3, lines 21-50; claim 1; figure 2 * | 2,3 | |

TECHNICAL FIELDS
SEARCHED (Int. Cl.5)

F 16 L

The present search report has been drawn up for all claims

| Place of search | Date of completion of the search | Examiner |
|---|---|---|
| THE HAGUE | 04-10-1990 | RICHARDS T G |

EPO FORM 1503 03.82 (P0401)